# EUROPEAN PATENT APPLICATION

(11) **EP 2 259 420 A1**
(43) Date of publication of application: **08.12.2010**
(21) Application number: 09161659.9
(22) Date of filing: 02.06.2009
(51) Int. Cl.: H02M 7/487

(54) **Single phase inverter**

(71) Applicant: ABB Research Ltd., 8050 Zürich (CH)
(72) Inventor: Serpa, Leonardo-Augusto, 5400 Baden (CH); Paakkinen, Mikko, 5400 Baden (CH)
(74) Representative: Valkeiskangas, Tapio Lassi Paavali

(57) **Abstract**

An inverter comprising input terminals (3, 4) for receiving DC voltage input, a series connection of capacitors (C1, C2) connected between the input terminals, a series connection of switch components (S1, S2) connected between the input terminals (3, 4), wherein a first AC terminal (5) of the inverter is formed from a midpoint between the series connection of the switch components (S1, S2) and a second AC terminal (6) of the inverter is formed from a midpoint between the series connection of the capacitors (C1, C2), the inverter further comprising a bi-directional switch unit (7) connected between the first and second AC terminals. The bi-directional switch unit (7) comprises first and second diodes (D1, D2) connected in series and forming a first series connection of diodes, third and fourth diodes (D3, D4) connected in series and forming a second series connection of diodes, the series connections of diodes being connected in parallel with the same polarities, a third switch component (S3) connected in parallel with the series connections of diodes, a point between the first and second diodes being connected to the second AC terminal (6) and a point between the third and fourth diode being connected to the first AC terminal (5).

## Description

### FIELD OF THE INVENTION

The present invention relates to an inverter, and more particularly to a single phase half-bridge inverter capable of producing three voltage levels.

### BACKGROUND OF THE INVENTION

Conventional grid connected single phase inverters are realized using a full-bridge configuration having four switches or a half-bridge configuration having two switches. These inverters are used in connection with, for example, photovoltaic applications, where the DC voltage from solar panels is converted to AC voltage and fed to the AC supply network.

A drawback of the four switch full-bridge inverter is the AC voltage between the DC inputs of the bridge and the ground. Especially in the photovoltaic applications this AC voltage is coupled to the ground via stray capacitance of a photovoltaic module. This voltage causes also current that could cause degradation especially in thin film photovoltaic modules.

This problem could be solved using a low frequency transformer between the inverter and the grid. Another solution is to use an isolated DC-DC converter where the transformer size could be reduced by increasing the switching frequency of the DC-DC converter. National regulations in some countries require a galvanic isolation between the PV-panels and the grid, but in some countries isolation is not required.

Document EP1861914 discloses a half-bridge inverter having a switch enabling bidirectional current flow connected between AC line and the DC-link midpoint. The structure presented in EP1861914 is shown in Figure 1. The bidirectional switch, which is implemented as a common collector circuit, is used to produce a zero voltage output to the half-bridge configuration to mitigate the DC-side leakage current. The bidirectional switch has two control electrodes which have to be controlled separately giving each different control depending on the polarity of the produced half-cycle.

### BRIEF DESCRIPTION OF THE INVENTION

An object of the present invention is to provide an inverter so as to solve the above problem. The object of the invention is achieved by an inverter which is characterized by what is stated in the independent claims. Preferred embodiments of the invention are disclosed in the dependent claims.

The invention is based on the idea of simplifying the known structures for providing three-level voltage. The simplification is achieved with the inverter of the present invention since only one control signal for controlling the bi-directional switch is needed.

### BRIEF DESCRIPTION OF THE DRAWINGS

In the following the invention will be described in greater detail by means of preferred embodiments with reference to the accompanying drawings, in which
Figure 1 shows a prior art inverter circuit;
Figure 2 shows a circuit according to a preferred embodiment of the invention;
Figure 3 shows another embodiment of the invention; and
Figure 4 shows an embodiment of the invention with a three-level boost circuit.

### DETAILED DESCRIPTION OF THE INVENTION

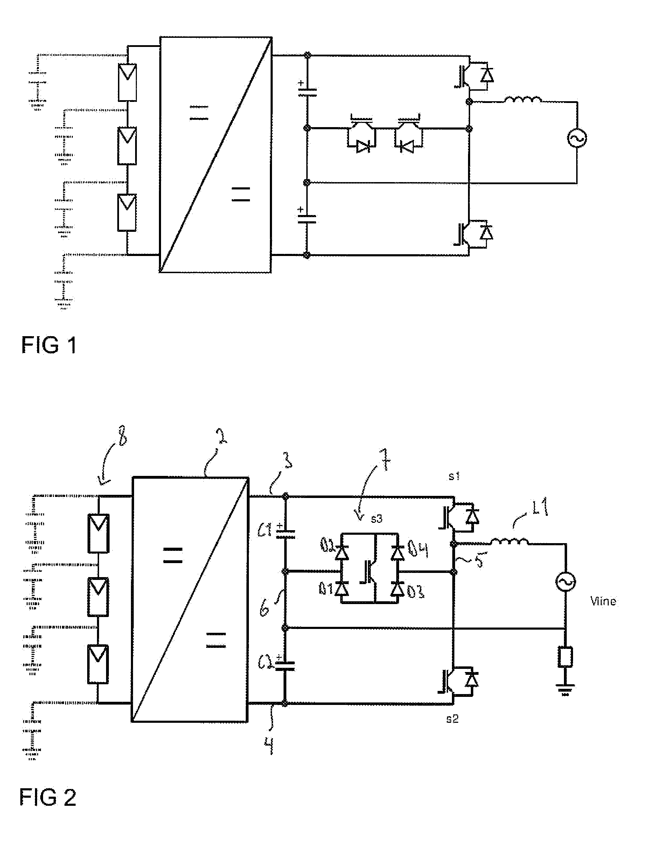

Figure 2 shows an embodiment in which a DC-DC converter 2 supplies DC voltage to an inverter of the present invention. The input DC voltage to the inverter is split with a series connection of capacitors C1, C2. The terminals of the series connections form input terminals 3, 4 of the inverter. A series connection of semiconductor switches s1, s2 is also connected between the input terminals, and these switches are operated for forming an alternating voltage to the output terminals 5, 6. The first output terminal 5 is formed of a point between the switch components s1 and s2. Thus the switch components are operated to conduct either a positive input DC voltage or a negative input DC voltage to the first output terminal 5.

The second output terminal 6 is formed of a point between the capacitors C1, C2. The voltage of the second output terminal is substantially fixed with reference to voltage levels available to the first output terminal. Figure 2 further shows that the second output terminal is further connected to the ground, thereby making the voltage of the first output terminal either positive or negative with respect to the second output terminal.

The inverter in Figure 2 is shown to be connected to the grid for feeding power. The grid is symbolized as an alternating voltage Vline. The output of the inverter is connected to the grid via an inductive component L1 which is used to filter the produced current and voltage waveforms. A DC voltage source 8 producing DC voltage to the circuit shown in Figure 2 is shown to be a series connection of photovoltaic panels or solar cells. The panels have a parasitic capacitance to earth, which is also symbolized in Figure 2 with capacitors drawn in dashed lines.

For producing three-level voltage, the inverter of the present invention comprises a bidirectional switch unit 7. The unit is operated for providing a zero voltage level to the output of the inverter. The bidirectional switch unit connects the midpoint between capacitors, which is also the second output terminal 6, to the first output terminal 5. In the embodiment of Figure 2 the bidirectional switch unit 7 is formed of four diodes and one controllable switch component s3.

In the switch unit, a first diode D1 and a second diode D2 are connected in series similarly to a third diode D3 and a fourth diode D4. The series connections are further connected in parallel with the same polarities. In parallel with the series connected diodes, there is connected a controlled switch component s3, which may be an IGBT or a Mosfet component, for example. The polarity of the switch component is such that the current flowing through the diodes can also flow through the on-state controlled switch component.

The bidirectional switch unit forms a diode bridge which enables current to pass either from the first output terminal 5 to the second output terminal 6 or from the second output terminal to the first output terminal. If the direction of the current to the grid is from the first output terminal to the inductive component and a zero voltage state is selected as output voltage, the current is drawn from the midpoint between the capacitors through the second diode D2, switch s3, and third diode D3. If the direction of the current to the load is the opposite, the current flows via the fourth diode D4, switch component s3, and first diode D1. Thus the diodes lead the current to the switch component in the right direction no matter what the direction of the current is.

For producing the zero voltage output of the inverter, the switch s3 is turned on and the first and second output terminals 5 and 6 are connected to each other. Since the second output terminal 6 has a zero voltage, the first output terminal 5 also assumes this voltage. The control of the bidirectional switch is simple since the direction of the current in the load does not have to be taken into account when taking a zero voltage state into use.

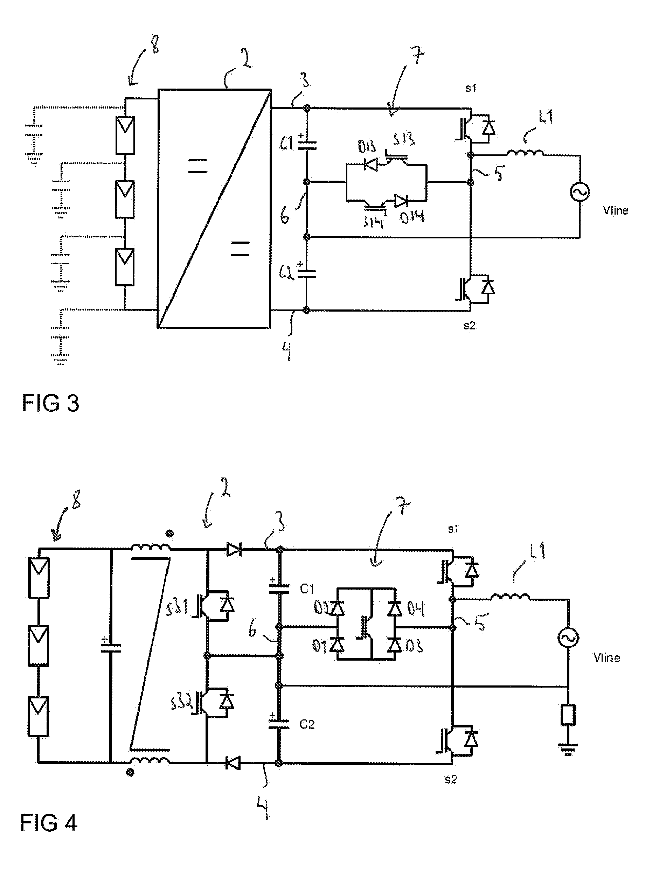

Figure 3 shows another embodiment of the present invention. The embodiment of Figure 3 differs from the embodiment of Figure 2 in that the bidirectional switch is implemented by using two controllable switch components s13, s14 and two diodes D13, D14. The diodes D13, D14 are connected in series with the respective switch components s13, s14 and the series connections are further connected in antiparallel with each other. The diodes are used for blocking reverse voltages which would otherwise be harmful to the switch components. The bidirectional switch unit connects the first and second output terminals together. For simplification of the inverter, the same control signal can be applied to both switch components s13, s14. This way only one drive circuitry is required and there is no need to take into account the direction of current.

Figure 4 shows an embodiment of the invention, in which the DC-DC converter is implemented as a three-level boost converter. The structure of such a boost converter is known as such. The switches s31, s32 of the boost converter are modulated in a known manner for producing a desired voltage level. In connection with the inverter of the invention, the boost converter is used to boost supplied DC voltage to a suitable level for the inverter part. When the inverter feeds power to the grid, the voltage between the input terminals 3, 4 should be higher than the peak to peak voltage of the grid.

Another purpose of the boost converter is to balance the voltage of the capacitors, i.e. to keep the voltages of the capacitors C1 and C2 charged to the same voltage. Depending on the operation of the switches s31, s32, the voltage from the DC source can be connected to charge the capacitors in a desired manner if the voltages are not balanced. For example the capacitor C2 can be charged by controlling the switch s31 conductive and the switch s32 to the blocking state. Similarly, the voltage of the DC source can be connected to act over the capacitor C1 by opening the switch s32 and closing the switch s31.

In connection with Figures 3 and 4, only parts differing from Figure 2 are explained above. The same reference numerals are used in Figures 3 and 4 for corresponding features.

In the figures, the source of DC voltage is indicated to be an array of solar cells or panels. However, it is clear that the inverter of the invention can be used in connection with any kind of DC voltage sources.

It will be obvious to a person skilled in the art that, as technology advances, the inventive concept can be implemented in various ways. The invention and its embodiments are not limited to the examples described above but may vary within the scope of the claims.

## Claims

1. An inverter comprising input terminals (3, 4) for receiving DC voltage input, a series connection of capacitors (C1, C2) connected between the input terminals, a series connection of switch components (S1, S2) connected between the input terminals (3, 4), wherein a first AC terminal (5) of the inverter is formed from a midpoint between the series connection of the switch components (S1, S2) and a second AC terminal (6) of the inverter is formed from a midpoint between the series connection of the capacitors (C1, C2), the inverter further comprising a bi-directional switch unit (7) connected between the first and second AC terminals, **characterized in that** the bi-directional switch unit (7) comprises
first and second diodes (D1, D2) connected in series and forming a first series connection of diodes,
third and fourth diodes (D3, D4) connected in series and forming a second series connection of diodes, the series connections of diodes being connected in parallel with the same polarities,
a third switch component (S3) connected in parallel with the series connections of diodes, a point between the first and second diodes being connected to the second AC terminal (6) and a point between the third and fourth diode being connected to the first AC terminal (5).

2. An inverter comprising input terminals (3, 4) for receiving DC voltage input, a series connection of capacitors (C1, C2) connected between the input terminals, a series connection of switch components (S1, S2) connected between the input terminals (3, 4), wherein a first AC terminal (5) of the inverter is formed from a midpoint between the series connection of the switch components (S1, S2) and a second AC terminal (6) of the inverter is formed from a midpoint between the series connection of the capacitors (C1, C2), the inverter further comprising a bi-directional switch unit (7) connected between the first and second AC terminals, **characterized in that** the bi-directional switch unit (7) comprises
two series connections of a switch component (S13, S14) and a diode (D13, D14), which series connections are connected in antiparallel with each other.

3. An inverter as claimed in claim 1 or 2, **characterized in that** the bidirectional switch unit (7) is adapted to be controlled using one control signal.

4. An inverter as claimed in claim 1, 2 or 3, **characterized in that** the inverter further comprises a DC-DC converter, an output of which is connected to the input terminals (3, 4) of the inverter.

5. An inverter as claimed claim 4, **characterized in that** the DC-DC converter is a three-level boost converter.

6. An inverter as claimed claim 4 or 5, **characterized in that** the DC-DC converter is adapted to balance voltages of the series connected capacitors (C1, C2).

7. An inverter as claimed in any one of the preceding claims, **characterized in that** the inverter comprises one or more photovoltaic cells as a DC voltage source.
